# EUROPEAN PATENT APPLICATION

(11) **EP 4 604 557 A1**
(43) Date of publication of application: **20.08.2025**
(21) Application number: 23876471.6
(22) Date of filing: 18.09.2023
(51) Int. Cl.: H04N 21/431

(54) **VIDEO PROCESSING METHOD, APPARATUS AND DEVICE, AND STORAGE MEDIUM**

(30) Priority: 13.10.2022 CN 202211258305
(71) Applicant: Beijing Zitiao Network Technology Co., Ltd., Beijing 100190 (CN)
(72) Inventor: JIANG, Jiaxin, Beijing 100028 (CN); ZHANG, Kai, Beijing 100028 (CN)
(74) Representative: Marks & Clerk LLP
(86) International application number: PCT/CN2023/119410
(87) International publication number: WO 2024/078266

(57) **Abstract**

Provided in the present disclosure are a video processing method, apparatus and device, and a storage medium. The method comprises: first, in response to a preset trigger operation acting on a video playing page of a first video, displaying a mask page on the current video frame picture of the first video; and then, in response to a preset sliding operation acting on the mask page, pulling up a video recommendation page from the bottom of the mask page for display, and displaying, on the video recommendation page, a cover of a recommended video corresponding to the first video, wherein the recommended video belongs to a recommended video stream, which is determined on the basis of the first video. It can be seen that the embodiments of the present disclosure can achieve, by means of a preset sliding operation acting on a mask page on the current video frame picture, the effect of pulling up a video recommendation page from the bottom of a mask page for display, and can provide a user with a function of smoothly switching a video playing page to the video recommendation page, thereby enriching a video-based interaction function and improving the user experience.

## Description

The present application claims priority of the Chinese Patent Application No. 202211258305.3, filed on October 13, 2022, and the entire contents of the above-mentioned Chinese Patent application are incorporated herein by reference as part of the present application.

### TECHNICAL FIELD

Embodiments of the present disclosure relate to a video processing method, apparatus, and device, and a storage medium.

### BACKGROUND

With the continuous development of video processing technology, people's demands for video-related functions are becoming more and more diversified. Therefore, how to enrich video-related functions to meet more needs of users and thus enhance user experience is a technical problem that needs to be solved urgently.

### SUMMARY

In order to solve the above technical problem, the present disclosure provides a video processing method, apparatus, and device, and a storage medium, which can enrich video-based interactive functions and improve user experience.

In a first aspect, the present disclosure provides a video processing method, and the method comprises:
displaying, in response to a preset trigger operation acting on a video playing page of a first video, a mask page on a current video frame picture of the first video;
pulling up, in response to a preset slide operation acting on the mask page, a video recommendation page from a bottom of the mask page for display, and showing a cover of a recommended video corresponding to the first video on the video recommendation page;
the recommended video belongs to a recommended video stream determined based on the first video.

In an optional implementation, the displaying, in response to a preset trigger operation acting on a video playing page of a first video, a mask page on a current video frame picture of the first video, comprises:
displaying, in response to the preset trigger operation acting on a title region in the video playing page of the first video, the mask page on the current video frame picture of the first video. Title information in the title region is shown on the mask page.

In an optional implementation, the method further comprises:
exiting, in response to a preset exiting trigger operation acting on the mask page, the mask page, and displaying the video playing page of the first video.

In an optional implementation, the method further comprises:
playing, in response to a trigger operation on a cover of a target recommended video on the video recommendation page, the target recommended video.

In an optional implementation, the method further comprises:
determining, in response to a video switching operation on the target recommended video, a post-switching recommended video based on the recommended video stream, and playing the post-switching recommended video.

In an optional implementation, the method further comprises:
displaying, in response to a play exiting operation on a currently playing video in the recommended video stream, the video recommendation page, and displaying a cover of the currently playing video in an anchored manner on the video recommendation page.

In an optional implementation, the showing a cover of a recommended video corresponding to the first video on the video recommendation page comprises:
showing covers of recommended videos corresponding to the first video in a double-column form on the video recommendation page.

In a second aspect, the present disclosure provides a video processing apparatus, and the apparatus comprises:
a first display module, configured to display, in response to a preset trigger operation acting on a video playing page of a first video, a mask page on a current video frame picture of the first video;
a second display module, configured to pull up, in response to a preset slide operation acting on the mask page, a video recommendation page from a bottom of the mask page for display, and show a cover of a recommended video corresponding to the first video on the video recommendation page;
the recommended video belongs to a recommended video stream determined based on the first video.

In a third aspect, the present disclosure provides a computer-readable storage medium, the computer-readable storage medium stores instructions, and when the instructions are executed on a terminal device, the terminal device is caused to implement the above method.

In a fourth aspect, the present disclosure provides a video processing device, comprising: a memory, a processor, and a computer program stored on the memory and executable by the processor, when the processor executes the computer program, the above method is implemented.

In a fifth aspect, the present disclosure provides a computer program product, the computer program product comprises a computer program/instruction, and the computer program/instruction, when executed by a processor, implement the above method.

### BRIEF DESCRIPTION OF DRAWINGS

The accompanying drawings herein are incorporated into and constitute a part of the specification, show the embodiments consistent with the present disclosure, and, together with the specification, serve to explain the principles of the present disclosure.

In order to more clearly illustrate the embodiments of the present disclosure, the drawings required for describing the embodiments will be briefly described in the following; it is obvious that those skilled in the art can obtain other drawing(s) according to these drawings, without any inventive work.
Fig. 1 is a flowchart of a video processing method provided by an embodiment of the present disclosure;
Fig. 2 is a schematic diagram of a video playing page being displayed provided by an embodiment of the present disclosure;
Fig. 3 is a schematic diagram of a mask page being displayed provided by an embodiment of the present disclosure;
Fig. 4 is a schematic effect diagram of pulling up a video recommendation page from a bottom of a mask page for display provided by an embodiment of the present disclosure;
Fig. 5 is a schematic diagram of a video recommendation page being displayed provided by an embodiment of the present disclosure;
Fig. 6 is a schematic diagram of a playing page of a recommended video provided by an embodiment of the present disclosure;
Fig. 7 is a schematic structural diagram of a video processing apparatus provided by an embodiment of the present disclosure; and
Fig. 8 is a schematic structural diagram of a video processing device provided by an embodiment of the present disclosure.

### DETAILED DESCRIPTION

In order to understand the above objects, features, and advantages of the present disclosure more clearly, the technical solutions of the present disclosure will be further described below. It should be noted that, in case of no conflict, the embodiments of the present disclosure and the features in the embodiments can be combined with each other.

In the following description, many specific details are set forth in order to fully understand the present disclosure, but the present disclosure may be implemented in other ways than those described herein; apparently, the embodiments in the specification are just a part but not all of the embodiments of the present disclosure.

With the continuous development of video processing technology, people's demands for video-related functions are becoming more and more diverse. Therefore, how to enrich video-related functions to meet more needs of users and thus enhance user experience is a technical problem that needs to be solved urgently.

Therefore, an embodiment of the present disclosure provides a video processing method. Firstly, in response to a preset trigger operation acting on a video playing page of a first video, a mask page is displayed on a current video frame picture of the first video; then, in response to a preset slide operation acting on the mask page, a video recommendation page is pulled up from a bottom of the mask page for display, and a cover of a recommended video corresponding to the first video is shown on the video recommendation page; the recommended video belongs to a recommended video stream determined based on the first video. It can be seen that the embodiment of the present disclosure can achieve the effect of pulling up the video recommendation page from the bottom of the mask page to display through the preset slide operation acting on the mask page on the current video frame picture, and provide the user with the function of smoothly switching from the video playing page to the video recommendation page, thus enriching the video-based interactive functions and improving the user experience.

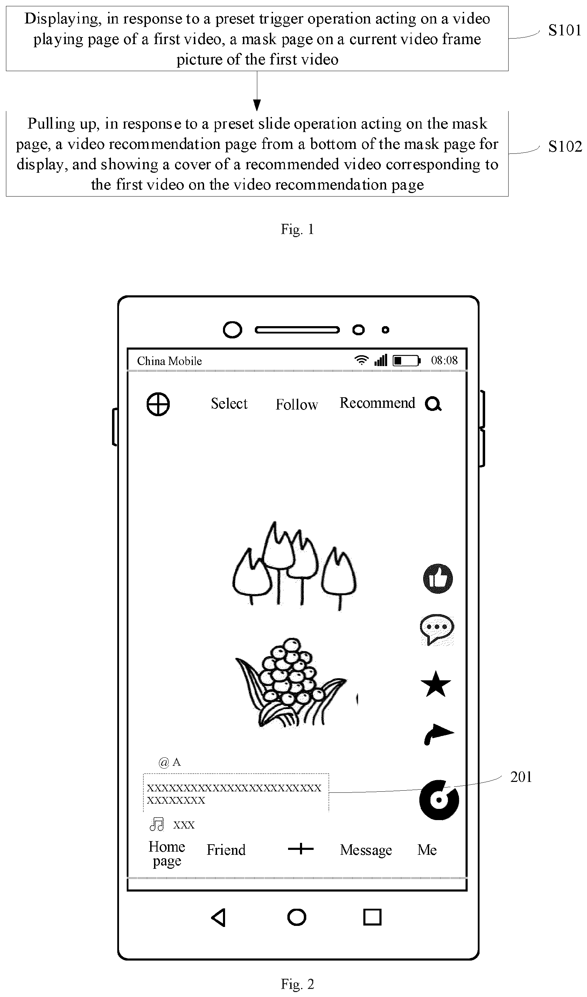

Based on this, an embodiment of the present disclosure provides a video processing method. Referring to Fig. 1, which is a flowchart of a video processing method provided by an embodiment of the present disclosure, the method includes:
S101: displaying, in response to a preset trigger operation acting on a video playing page of a first video, a mask page on a current video frame picture of the first video.

The video processing method provided by the embodiment of the present disclosure can be applied to a client; and for example, the client can include a client deployed on a smart phone, a client deployed on a tablet computer, etc.

In the embodiment of the present disclosure, the first video can be any video; and specifically, the first video can be any video in any video stream.

In the embodiment of the present disclosure, the preset trigger operation acting on the video playing page of the first video can include a preset trigger operation acting on a preset region on the video playing page of the first video; and specifically, the preset region can be a title region used for displaying title information of the first video, etc.; and the preset trigger operation can be a single click operation, a double click operation, a slide operation, etc.

In the embodiment of the present disclosure, the mask page is a page with a preset transparency. While the mask page is displayed on the current video frame picture of the first video, the first video can be in a playing state. That is, because the mask page has a preset transparency, even if the mask page is displayed on the current video frame picture of the first video, the user can still watch the first video in the playing state.

In an optional implementation, when a preset trigger operation acting on the title region in the video playing page of the first video is received, a mask page is displayed on the current video frame picture of the first video, and the title information, that is, the title information of the first video, in the title region is shown on the mask page.

As shown in Fig. 2, which is a schematic diagram of a video playing page provided by an embodiment of the present disclosure, part or all of the title information of the first video is displayed in the title region 201. Displaying part of the title information of the first video means displaying the title information of the first video in a collapsed manner, and at the same time, an "expand" control is displayed in the title region, and is used to trigger displaying all of the title information of the first video in an expanded manner.

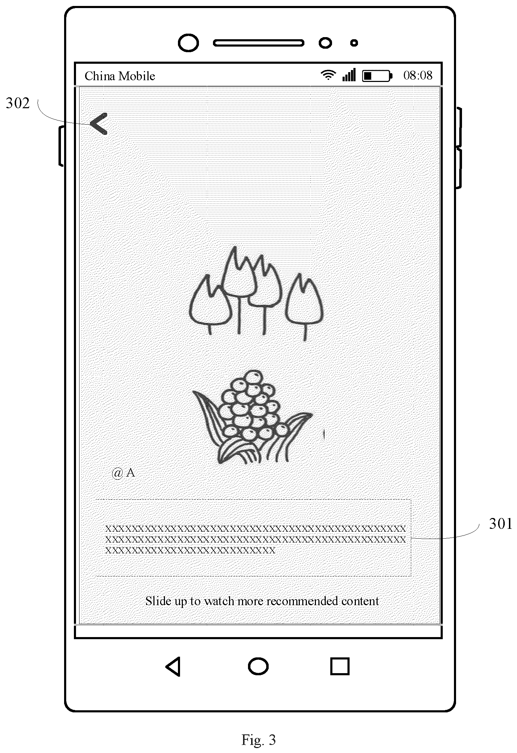

As shown in Fig. 2, when a preset trigger operation acting on the title region 201 in the video playing page of the first video, a mask page is displayed on the current video frame picture of the first video. As shown in Fig. 3, which is a schematic diagram of a mask page being displayed provided by an embodiment of the present disclosure, the title information 301 in the title region 201 on the video playing page is shown on the mask page. Specifically, all of the title information in the title region on the video playing page is shown on the mask page.

In the process of displaying the mask page, if the user wants to close the mask page, it can be achieved through a preset exiting trigger operation acting on the mask page.

In the embodiment of the present disclosure, the preset exiting trigger operation acting on the mask page can include a click operation acting on a blank region of the mask page, can also include a pull-down slide operation acting on the mask page, or can also include a slide operation acting on a preset edge region of the mask page, such as a left slide operation, etc.

In addition, a return control can be set on the mask page, and clicking the return control can also trigger exiting the mask page. As shown in Fig. 3, when receiving the click operation of the user acting on the return control 302 of the mask page, the mask page is exited, and the first video is continued to be played on the video playing page.

In addition, if the title information on the mask page is in a completely displaying state, a click operation acting on the title region on the mask page can also trigger exiting the mask page. If the title information on the mask page is in a partially displaying state, the click operation acting on the title region on the mask page triggers displaying the title information completely.

The preset exiting trigger operation for implementing to exit the mask page is not limited in the embodiments of the present disclosure. It is worth noting that after exiting the mask page, the video playing page of the first video can continue to be displayed.

S102: pulling up, in response to a preset slide operation acting on the mask page, a video recommendation page from a bottom of the mask page for display, and showing a cover of a recommended video corresponding to the first video on the video recommendation page.

In the embodiment of the present disclosure, the preset slide operation acting on the mask page can include a slide-up operation acting on the mask page, etc.

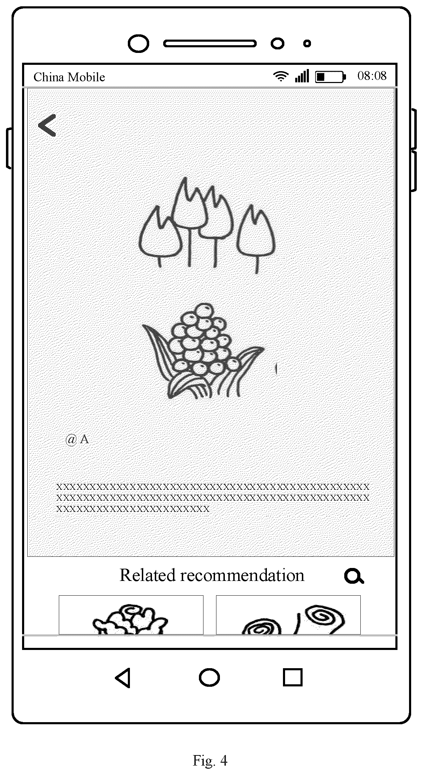

When the preset slide operation acting on the mask page is received, the video recommendation page is displayed by pulling it up from the bottom of the mask page, so as to achieve the display effect of smoothly switching from the video playing page to the video recommendation page. As shown in Fig. 4, which is a schematic effect diagram of pulling up a video recommendation page from a bottom of a mask page for display provided by an embodiment of the present disclosure, when a slide-up operation of the user acting on the mask page is received, the video recommendation page is smoothly pulled up from the bottom of the mask page for display.

In practical applications, in order to facilitate the user to understand the related functions of the video recommendation page, a prompt message, such as "Slide up to watch more recommended content" can be displayed at the bottom of the mask page, so as to prompt the user to experience the related functions based on the user's needs and improve the user experience.

In the embodiment of the present disclosure, the cover of the recommended video in the recommended video stream determined based on the first video is shown on the video recommendation page, the recommended video stream can include a preset number of recommended videos, and the recommended videos can be videos determined from a video resource of a server based on the features, such as the content tag or the like, of the first video. Exemplarily, assuming that the content tag of the first video includes "pet", the recommended video stream can include a preset number of videos with the content tag of "pet". For example, assuming that the first video is a video with the content tag of "kitten", a preset number of videos can be determined based on the content tag of the first video to form the recommended video stream determined based on the first video.

In an optional implementation, in order to facilitate the display of recommended videos, the video recommendation page is pulled up from the bottom of the mask page for display, and the covers of recommended videos in the recommended video stream can be displayed in a double-column form on the video recommendation page.

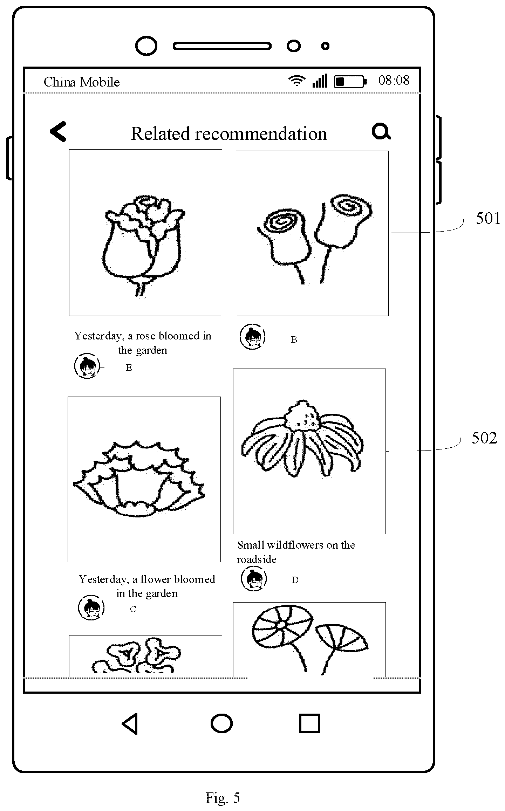

As shown in Fig. 5, which is a schematic diagram of a video recommendation page being displayed provided by an embodiment of the present disclosure, specifically, the covers of the recommended videos in the recommended video stream are displayed in a double-column form on the video recommendation page.

It is worth noting that the embodiments of the present disclosure do not limit the display form of the covers of the recommended videos on the video recommendation page.

In an optional implementation, the cover of each recommended video in the recommended video stream can be slid for display by a slide operation or the like acting on the video recommendation page, so that the user can select a recommended video to be played. Because the number of recommended videos included in the recommended video stream is limited, when it is detected that the cover of the last recommended video in the recommended video stream is displayed on the video recommendation page, a prompt message can be displayed at the bottom of the video recommendation page, so as to prompt the user that there are no more recommended videos at present, thereby improving the user experience.

In an optional implementation, in order to facilitate the user to know the content of the recommended video displayed on the video recommendation page, a preview picture of the recommended video can be displayed on the cover of the recommended video. The preview picture may only include one frame picture of the recommended video, and for example, the first frame video picture of the recommended video is taken as the cover of the recommended video; alternatively, the preview picture may also include a plurality of consecutive video frame pictures in the recommended video, and for example, a video clip that is played relatively more times in the recommended video is taken as the cover of the recommended video.

As shown in Fig. 5, a video clip that is played relatively more times in the recommended video is displayed on the cover 501 of the recommended video. Specifically, the video clip can be played circularly in the form of cover on the video recommendation page, so as to allow the user to preview the content in the recommended video, and the user can determine whether or not to trigger viewing the corresponding recommended video based on the previewed content, thus improving the user experience.

In the video processing method provided by the embodiments of the present disclosure, firstly, in response to a preset trigger operation acting on a video playing page of a first video, a mask page is displayed on a current video frame picture of the first video; then, in response to a preset slide operation acting on the mask page, a video recommendation page is pulled up from a bottom of the mask page for display, and a cover of a recommended video corresponding to the first video is shown on the video recommendation page; the recommended video belongs to a recommended video stream determined based on the first video. It can be seen that the embodiment of the present disclosure can achieve the effect of pulling up the video recommendation page from the bottom of the mask page for display through the preset slide operation acting on the mask page on the current video frame picture, and provide the user with the function of smoothly switching from the video playing page to the video recommendation page, thus enriching the video-based interactive functions and improving the user experience.

In practical applications, in the process of displaying the covers of the recommended videos on the video recommendation page, if the user wants to trigger playing any recommended video, the user can trigger, through a trigger operation on the cover of any recommended video, playing the recommended video on the video playing page.

In the embodiment of the present disclosure, when a trigger operation from the user on the cover of a target recommendation video on the video recommendation page is received, the target recommendation video is played. The trigger operation on the cover of the target recommendation video on the video recommendation page can include a click operation on the cover of the target recommendation video or the like. The target recommended video can be any recommended video displayed on the video recommendation page.

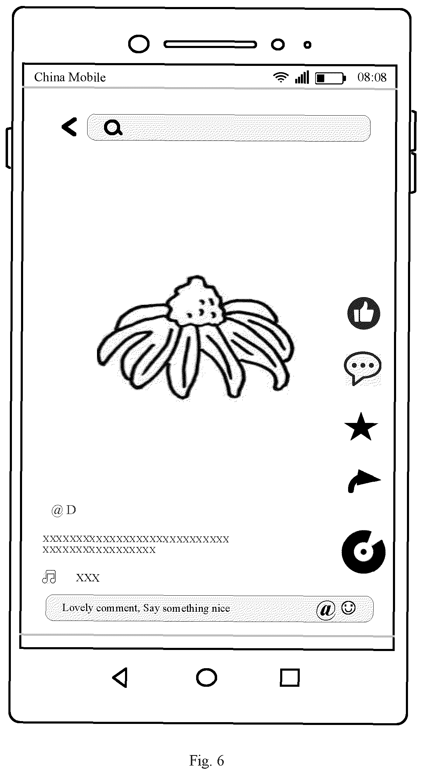

As shown in Fig. 5, when a click operation from the user on the cover 502 of a target recommended video on the video recommendation page is received, the target recommended video 502 is played on the page shown in Fig. 6, Fig. 6 is a schematic diagram of a playing page of a recommended video provided by an embodiment of the present disclosure.

In the process of playing the target recommended video, the user can also switch the playing of the recommended videos through a video switching operation, so as to further enrich the video-based interactive functions and improve the user experience.

In the embodiments of the present disclosure, the target recommended video played on the video playing page can be any video in the recommended video stream, which is determined by the server based on the features such as the content tag of the first video or the like and sent to the client from the server.

In the embodiments of the present disclosure, the video switching operation on the target recommended video can include a slide up operation or a slide down operation or the like acting on the playing page of the target recommended video, and is used to implement the function of switching the recommended videos.

In the embodiments of the present disclosure, when a video switching operation on the target recommended video is received, firstly, a post-switching recommended video is determined based on the recommended video stream to which the target recommended video belongs, that is, based on the slide up operation or slide down operation triggered by the user, the previous or next video adjacent to the target recommended video in the recommended video stream is determined as the post-switching recommended video, and then the post-switching recommended video is played on the video playing page.

In an optional implementation, when a video switching operation on the target recommended video is received, if it is determined that the target recommended video is the last recommended video in the recommended video stream, the user can be prompted that there are no more recommended videos and can be guided to return to the video recommendation page.

In the process of playing the recommended video in the recommended video stream, if the user wants to exit the playing page of the recommended video, the video recommendation page can be returned through performing a play exiting operation on the currently playing video, and the cover of the currently playing video is displayed in an anchored manner on the video recommendation page.

In the embodiments of the present disclosure, the play exiting operation for the currently playing video in the recommended video stream can include a click operation triggered on a preset return control provided on the video playing page, and can also include a left slide operation or the like on the video playing page, etc., which is used to achieve the function of displaying the video recommendation page.

For example, in the process of playing the recommended video on the video playing page shown in Fig. 6, the currently playing video is switched through a video switching operation acting on the recommended video; assuming that when switching to a fifteenth recommended video in the recommended video stream, the recommended video is played on the video playing page, and the video recommendation page shown in Fig. 6 can be displayed through a left slide operation acting on the video playing page, and the cover of the fifteenth recommended video in the recommended video stream can be displayed in an anchored manner on the video recommendation page. The user triggers displaying the cover of each recommended video on the video recommendation page through a slide operation or the like on the video recommendation page.

In an optional implementation, when the cover of the currently playing video is displayed in an anchored manner on the video recommendation page, identification information such as "Just Watched" can also be displayed on the cover of the currently playing video, so as to prompt the user of the display position of the currently playing video on the video recommendation page.

In the embodiments of the present disclosure, based on the recommended video stream in which the target recommended video is located, the function of switching to play the various recommended videos in the recommended video stream can be implemented on the video playing page. In addition, the embodiments of the present disclosure can also return to the video recommendation page through the play exiting operation on the currently playing video in the recommended video stream, thus further enriching video-based interactive functions and improving the user experience.

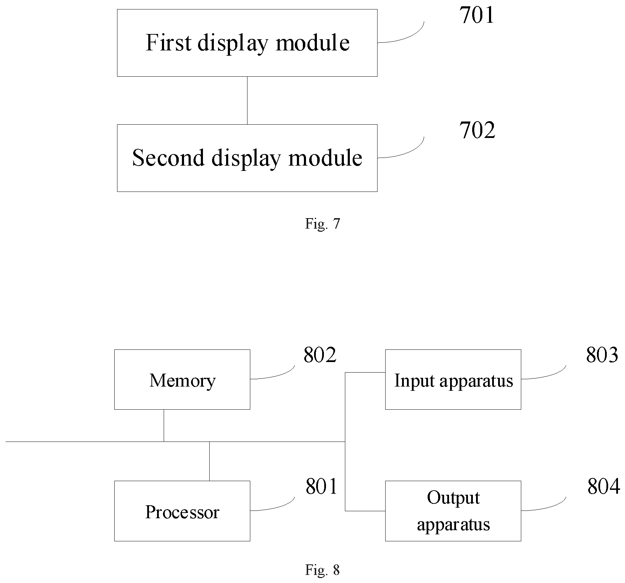

Based on the above method embodiments, the present disclosure further provides a video processing apparatus. Referring to Fig. 7, which is a schematic structural diagram of a video processing apparatus provided by an embodiment of the present disclosure, the apparatus includes:
a first display module 701, configured to display, in response to a preset trigger operation acting on a video playing page of a first video, a mask page on a current video frame picture of the first video;
a second display module 702, configured to pull up, in response to a preset slide operation acting on the mask page, a video recommendation page from a bottom of the mask page for display, and show a cover of a recommended video corresponding to the first video on the video recommendation page; the recommended video belongs to a recommended video stream determined based on the first video.

In an optional implementation, the first display module includes:
a display sub-module, configured to display, in response to the preset trigger operation acting on a title region in the video playing page of the first video, the mask page on the current video frame picture of the first video; title information in the title region is shown on the mask page.

In an optional implementation, the apparatus further includes:
an exit module, configured to exit, in response to a preset exiting trigger operation acting on the mask page, the mask page, and display the video playing page of the first video.

In an optional implementation, the apparatus further includes:
a play module, configured to play, in response to a trigger operation on a cover of a target recommended video on the video recommendation page, the target recommended video.

In an optional implementation, the apparatus further includes:
a determination module, configured to determine, in response to a video switching operation on the target recommended video, a post-switching recommended video based on the recommended video stream, and play the post-switching recommended video.

In an optional implementation, the apparatus further includes:
a third display module, configured to display, in response to a play exiting operation on a currently playing video in the recommended video stream, the video recommendation page, and display a cover of the currently playing video in an anchored manner on the video recommendation page.

In an optional implementation, the apparatus further includes:
a show module, configured to show covers of recommended videos corresponding to the first video in a double-column form on the video recommendation page.

In the video processing apparatus provided by the embodiments of the present disclosure, firstly, in response to a preset trigger operation acting on a video playing page of a first video, a mask page is displayed on a current video frame picture of the first video; then, in response to a preset slide operation acting on the mask page, a video recommendation page is pulled up from a bottom of the mask page for display, and a cover of a recommended video corresponding to the first video is shown on the video recommendation page; the recommended video belongs to a recommended video stream determined based on the first video. It can be seen that the embodiments of the present disclosure can achieve the effect of pulling up the video recommendation page from the bottom of the mask page to display through the preset slide operation acting on the mask page on the current video frame picture, and provide the user with the function of smoothly switching from the video playing page to the video recommendation page, thus enriching the video-based interactive functions and improving the user experience.

In addition to the method and apparatus described above, an embodiment of the present disclosure further provides a computer-readable storage medium, instructions are stored on the computer-readable storage medium, and when the instructions are run on a terminal device, the terminal device is caused to implement the video processing method provided by the embodiment of the present disclosure.

An embodiment of the present disclosure further provides a computer program product, the computer program product includes a computer program/instruction, and when the computer program/instruction is executed by a processor, the video processing method provided by the embodiment of the present disclosure is implemented.

In addition, an embodiment of the present disclosure further provides a video processing device, as shown in Fig. 8, which can include:
a processor 801, a memory 802, an input apparatus 803, and an output apparatus 804. The number of processors 801 in the video processing device can be one or more, and one processor is taken as an example in Fig. 8. In some embodiments of the present disclosure, the processor 801, the memory 802, the input apparatus 803, and the output apparatus 804 can be connected through a bus or other means, the connection through a bus is taken as an example in Fig. 8.

The memory 802 can be used to store software programs and modules, and the processor 801 executes various functional applications and data processing of the video processing device by running the software programs and modules stored on the memory 802. The memory 802 can mainly include a program storage area and a data storage area, the program storage area can store an operating system, an application program required by at least one function, and the like. In addition, the memory 802 can include a highspeed random-access memory, and can also include a non-volatile memory, such as at least one magnetic disk storage device, flash memory device, or other volatile solid-state memory devices. The input apparatus 803 can be used to receive digital or character information being input and generate signal input related to user settings and functional control of the video processing device.

Specifically, in the present embodiment, the processor 801 may load, according to the following instructions, executable files corresponding to the processes of one or more application programs into the memory 802, and the processor 801 may run the application programs stored in the memory 802, thus implementing various functions of the above video processing device.

It should be noted that in the present disclosure, relationship terms, such as "first" and "second", etc., are only used to distinguish one entity or operation from another entity or operation, and do not necessarily require or imply any actual relationship or order between these entities or operations. Moreover, the terms "including/comprising", "containing", or any other variations thereof are intended to encompass non-exclusive inclusion, such that a process, a method, an article, or a device that includes a series of elements not only includes those elements, but also other elements that are not explicitly listed, or also includes elements inherent in such a process, method, article, or device. Without further limitations, an element limited by the statement "including one ... " does not exclude the existence of other identical elements in the process, method, article, or device that includes the element.

What has been described above is only the specific implementations of the present disclosure, so that those skilled in the art can understand or implement the present disclosure. The various modifications to these embodiments may be apparent to those skilled in the art, and the general principles defined in the present disclosure may be achieved in other embodiments without departing from the spirit or scope of the present disclosure. Therefore, the present disclosure will not be limited to the embodiments described herein, but rather to the broadest scope consistent with the principles and novel features disclosed herein.

## Claims

1. A video processing method, comprising:
displaying, in response to a preset trigger operation acting on a video playing page of a first video, a mask page on a current video frame picture of the first video;
pulling up, in response to a preset slide operation acting on the mask page, a video recommendation page from a bottom of the mask page for display, and showing a cover of a recommended video corresponding to the first video on the video recommendation page;
wherein the recommended video belongs to a recommended video stream determined based on the first video.

2. The method according to claim 1, wherein the displaying, in response to a preset trigger operation acting on a video playing page of a first video, a mask page on a current video frame picture of the first video, comprises:
displaying, in response to the preset trigger operation acting on a title region in the video playing page of the first video, the mask page on the current video frame picture of the first video;
wherein title information in the title region is shown on the mask page.

3. The method according to claim 1 or 2, further comprising:
exiting, in response to a preset exiting trigger operation acting on the mask page, the mask page, and displaying the video playing page of the first video.

4. The method according to any one of claims 1-3, further comprising:
playing, in response to a trigger operation on a cover of a target recommended video on the video recommendation page, the target recommended video.

5. The method according to claim 4, further comprising:
determining, in response to a video switching operation on the target recommended video, a post-switching recommended video based on the recommended video stream, and playing the post-switching recommended video.

6. The method according to claim 4 or 5, further comprising:
displaying, in response to a play exiting operation on a currently playing video in the recommended video stream, the video recommendation page, and displaying a cover of the currently playing video in an anchored manner on the video recommendation page.

7. The method according to any one of claims 1-6, wherein the showing a cover of a recommended video corresponding to the first video on the video recommendation page comprises:
showing covers of recommended videos corresponding to the first video in a double-column form on the video recommendation page.

8. A video processing apparatus, comprising:
a first display module, configured to display, in response to a preset trigger operation acting on a video playing page of a first video, a mask page on a current video frame picture of the first video;
a second display module, configured to pull up, in response to a preset slide operation acting on the mask page, a video recommendation page from a bottom of the mask page for display, and show a cover of a recommended video corresponding to the first video on the video recommendation page;
wherein the recommended video belongs to a recommended video stream determined based on the first video.

9. A computer-readable storage medium, storing instructions thereon, wherein when the instructions are run on a terminal device, the terminal device is caused to implement the method according to any one of claims 1-7.

10. A video processing device, comprising: a memory, a processor, and a computer program stored on the memory and executable by the processor, wherein when the processor executes the computer program, the method according to any one of claims 1-7 is implemented.

11. A computer program product, comprising a computer program/instruction, wherein when the computer program/instruction is executed by a processor, the method according to any one of claims 1-7 is implemented.
